(19)

Europäisches
Patentamt
European
Patent Office
Office européen
des brevets

(11) **EP 2 544 287 A1**

(12) **EUROPEAN PATENT APPLICATION**
published in accordance with Art. 153(4) EPC

(43) Date of publication:
**09.01.2013 Bulletin 2013/02**

(51) Int Cl.:
***H01M 8/04*** *(2006.01)*        ***H01M 8/12*** *(2006.01)*

(21) Application number: **11750430.8**

(86) International application number:
**PCT/JP2011/051820**

(22) Date of filing: **28.01.2011**

(87) International publication number:
**WO 2011/108317 (09.09.2011 Gazette 2011/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2010   JP 2010044708**

(71) Applicants:
• **Toyota Jidosha Kabushiki Kaisha
Toyota-shi, Aichi 471-8571 (JP)**

• **Aisin Seiki Kabushiki Kaisha
Aichi 448-8650 (JP)**

(72) Inventor: **MASUI, Takatoshi
Toyota-shi
Aichi 471-8571 (JP)**

(74) Representative: **Albutt, Anthony John et al
D Young & Co LLP
120 Holborn
London EC1N 2DY (GB)**

(54) **FUEL CELL SYSTEM, FUEL CELL CONTROL METHOD, AND FUEL CELL DETERMINATION METHOD**

(57)    A fuel cell system includes: an input-amplitude-value obtain unit that obtains an amplitude value of an input value given to a fuel cell; an output-amplitude-value obtain unit that obtains an amplitude value of an output value output from the fuel cell; and an operation condition change unit that changes an operation condition of the fuel cell according to a comparison of an amplitude value of an input value obtained by the input-amplitude-value obtain unit and an amplitude value obtained by the output-amplitude-value obtain unit. Another fuel cell system includes: an input-amplitude-value obtain unit that obtains an amplitude value of an input value given to a fuel cell; an output-amplitude-value obtain unit that obtains an amplitude value of an output value output from the fuel cell; and a deterioration determination unit that determines deterioration of the fuel cell according to a comparison of an amplitude value of an input value obtained by the input-amplitude-value obtain unit and an amplitude value of an output value obtained by the output-amplitude-value obtain unit.

FIG. 1

EP 2 544 287 A1

**Description**

TECHNICAL FIELD

The present invention relates to a fuel cell system, a fuel cell control method and a fuel cell determination method.

BACKGROUND ART

In general, a fuel cell is a device that obtains electrical power from fuel such as hydrogen and oxygen. Fuel cells are being widely developed as an energy supply system because fuel cells are environmentally superior and can achieve high energy efficiency.

A fuel cell and an auxiliary device of a fuel cell may deteriorate as power generation continues. It is difficult to externally determine deterioration of the fuel cell or the auxiliary device. Therefore, it is preferable that the deterioration can be determined with use of output of the fuel cell. For example, Patent Document 1 discloses an art in which deterioration of a reformer is determined based on output of the reformer (reformed gas).

PRIOR ART DOCUMENTS

PATENT DOCUMENT

Patent Document 1: International Publication No. 2005/018035

SUMMARY OF THE INVENTION

PROBLEMS TO BE SOLVED BY THE INVENTION

However, it is not possible to determine deterioration of a fuel cell or abnormality of an auxiliary device with the art of the Patent Document 1.

Therefore, in view of the problem described above, it is an object of the present invention to provide a fuel cell system, a fuel cell control method and a fuel cell determination method that are capable of determining deterioration of a fuel cell or abnormality of an auxiliary device easily.

MEANS FOR SOLVING THE PROBLEMS

A fuel cell system in accordance with the present invention is characterized by including: an input-amplitude-value obtain unit that obtains an amplitude value of an input value given to a fuel cell; an output-amplitude-value obtain unit that obtains an amplitude value of an output value output from the fuel cell; and an operation condition change unit that changes an operation condition of the fuel cell according to a comparison of an amplitude value of an input value obtained by the input-amplitude-value obtain unit and an amplitude value of an output value obtained by the output-amplitude-value obtain unit. In accordance with the fuel cell system of the present invention, it is possible to determine deterioration of a fuel cell easily with use of an input and an output of the fuel cell. Thus, it is possible to change an operation condition according to the deterioration of the fuel cell.

The operation condition change unit may change the operation condition of the fuel cell when a difference between the amplitude value of the input value and the amplitude value of the output value is a predetermined value or less. An anode pressure may be used as the input value given to the fuel cell. The anode pressure may be a pressure in a reformer that generates fuel gas including hydrogen through a steam-reforming reaction with use of reform water and supplies the fuel gas to an anode of the fuel cell. At least one of a power-generation electrical power, a power-generation current and a power-generation voltage may be used as the output value of the fuel cell. Oxygen concentration in exhaust gas exhausted when anode off gas of the fuel cell burns with use of cathode off gas may be used as the output value of the fuel cell.

A standard deviation of the input value and the output value may be used in the comparison of the amplitude value of the input value and the amplitude value of the output value. A multiplied value or a divided value of standard deviations of the input value and the output value may be used in the comparison of the amplitude value of the input value and the amplitude value of the output value. A moving average value of a multiplied value or a divided value of standard deviations of the input value and the output value may be used in the comparison of the amplitude value of the input value and the amplitude value of the output value.

The operation condition change unit may lower a rated output of the fuel cell when a difference between the amplitude value of the input value and the amplitude value of the output value is a predetermined value or less. The operation condition change unit may increase at least one of a supply amount of fuel gas to the fuel cell and a supply amount of oxidant gas to the fuel cell when a difference between the amplitude value of the input value and the amplitude value of the output value is a predetermined value or less.

Another fuel cell system of the present invention is characterized by including: an input-amplitude-value obtain unit that obtains an amplitude value of an input value given to a fuel cell; an output-amplitude-value obtain unit that obtains an amplitude value of an output value output from the fuel cell; and a deterioration determination unit that determines deterioration of the fuel cell according to a comparison of an amplitude value of an input value obtained by the input-amplitude-value obtain unit and an amplitude value of an output value obtained by the output-amplitude-value obtain unit. In accordance with the another fuel cell system of the present invention, it is possible to determine deterioration of a fuel cell easily with use of an input and an output of the fuel cell.

Another fuel cell system of the present invention is characterized by including: a supply amount control device that controls a supply amount of fluid required for supplying of reaction gas to a fuel cell; a sensor that detects property of reaction gas or reaction off gas exhausted from the fuel cell or an output of the fuel cell; an overlap unit that overlaps an add signal having a predetermined cycle and predetermined amplitude with a control command value given to the supply amount device; and a determination unit that determines a relation between amplitude of the control command value and amplitude of a detected value of the sensor when the add signal is overlapped with the control command value. In accordance with the fuel cell system of the present invention, it is possible to determine whether there is an abnormality of an auxiliary device without variability or error of detected value of a sensor.

The determination unit may determine that there is abnormality of one of the supply amount control device and the sensor when a divergence degree of a ratio between the amplitude of the control command value and the amplitude of the detected value of the sensor from a reference value is more than a predetermined value or less than a predetermined value. The determination unit may use a standard deviation of the amplitude of the control command value and a standard deviation of the amplitude of the detected value of the sensor are used when the ratio between the amplitude of the control command value and the amplitude of the detected value of the sensor is obtained.

The determination unit may use detected values of a plurality of the sensors detecting the property of the reaction gas or the reaction off gas or the output of the fuel cell. The determination unit may determine that there is abnormality of one of the plurality of the sensors in which there is abnormality of one of the supply amount control device and the sensor.

The supply amount control device may control a supply amount of raw fuel supplied to a reformer generating fuel gas used in power-generation in the fuel cell; and the plurality of the sensors may be a temperature sensor detecting a temperature of a combustion chamber in which off gas from the fuel cell burns and an oxygen concentration sensor detecting oxygen concentration in exhaust gas exhausted from the combustion chamber.

The overlap unit may overlap a first add signal having small amplitude and a second add signal having large amplitude with the control command value. An inform unit that informs an alarm when it is determined that there is abnormality of one of the supply amount control device and the sensor may be further provided. An operation condition change unit that changes an operation condition of the fuel cell when it is determined that there is abnormality of one of the supply amount control device and the sensor may be further provided.

A fuel cell control method of the present invention is characterized by including: an input-amplitude-value obtain step of obtaining an amplitude value of an input value given to a fuel cell; an output-amplitude-value obtain step of obtaining an amplitude value of an output value output from the fuel cell; and an operation condition change step of changing an operation condition of the fuel cell according to a comparison of an amplitude value of an input value obtained by the input-amplitude-value obtain step and an amplitude value obtained by the output-amplitude-value obtain step. In accordance with the fuel cell control method of the present invention, it is possible to determine deterioration of a fuel cell easily with use of an input and an output of the fuel cell. Thus, it is possible to change an operation condition according to the deterioration of the fuel cell.

A fuel cell determination method of the present invention is characterized by including: an input-amplitude-value obtain step of obtaining an amplitude value of an input value given to a fuel cell; an output-amplitude-value obtain step of obtaining an amplitude value of an output value output from the fuel cell; and a determination step of determining deterioration of the fuel cell according to a comparison of an amplitude value of an input value obtained by the input-amplitude-value obtain step and an amplitude value obtained by the output-amplitude-value obtain step. In accordance with the fuel cell control method of the present invention, it is possible to determine deterioration of a fuel cell easily with use of an input and an output of the fuel cell.

A fuel cell control method of the present invention is characterized by including: an overlap step of overlapping an add signal having a predetermined cycle and predetermined amplitude with a control command value given to the supply amount device that controls a supply amount of fluid required for supplying of reaction gas to a fuel cell; and a determination step of determining a relation between amplitude of the control command value and amplitude of a detected value of a sensor that detects property of reaction gas or reaction off gas exhausted from the fuel cell or an output of the fuel cell when the add signal is overlapped with the control command value. In accordance with the fuel cell control method, it is possible to determine whether there is an abnormality of an auxiliary device without variability or error of detected value of a sensor.

EFFECTS OF THE INVENTION

According to the present invention, it is possible to provide a fuel cell system, a fuel cell control method and a fuel cell determination method that are capable of determining deterioration of a fuel cell or abnormality of an auxiliary device easily.

BRIEF DESCRIPTION OF THE DRAWINGS

FIG. 1 illustrates a block diagram of an overall structure of a fuel cell system in accordance with a first embodiment;
FIG. 2 illustrates a partial perspective view of a fuel cell structuring a fuel cell including a cross sectional view of a unit cell;
FIG. 3A and FIG. 3B illustrate a relation between an anode pressure and a power-generation current of a fuel cell;
FIG. 4 illustrates an example of a flowchart that is executed when deterioration of a fuel cell is determined;
FIG. 5 illustrates an example of a flow chart of a concrete example of a comparison between amplitude value of an input value and amplitude value of an output value of a fuel cell;
FIG. 6 illustrates a block diagram of an overall structure of a fuel cell system in accordance with a second embodiment;
FIG. 7 illustrates an example of a flowchart for determining deterioration of a fuel cell;
FIG. 8 illustrates a block diagram of an overall structure of a fuel cell system in accordance with a third embodiment;
FIG. 9 illustrates a perspective view of a fuel cell stack in a fuel cell;
FIG. 10A through FIG. 10C illustrate a perspective view of an overall structure of a fuel cell;
FIG. 11 illustrates a driving voltage of a raw fuel pump as an example of a control command value input to a supply amount control device, and illustrates a power-generation current value detected by a current sensor and a temperature value detected by a temperature sensor as a detected value of the sensor;
FIG. 12 illustrates an example of a control command value and an add signal;
FIG. 13 illustrates an example of a flowchart executed when a relation between amplitude of a control command value given to a supply amount control device and amplitude of a detected value of a sensor is obtained;
FIG. 14 illustrates an example of a flowchart of details of a calculation process of a self examination index;
FIG. 15 illustrates an example of a flowchart executed when accumulated power-generation time of a fuel cell is over a predetermined time;
FIG. 16 is an example of a flowchart executed when execution timing of the flowchart of FIG. 15 is determined; and
FIG. 17 illustrates an example of a flowchart executed when an auxiliary device having abnormality is specified.

MODES FOR CARRYING OUT THE INVENTION

A description will now be given of best modes for carrying out the present invention.
(First embodiment)

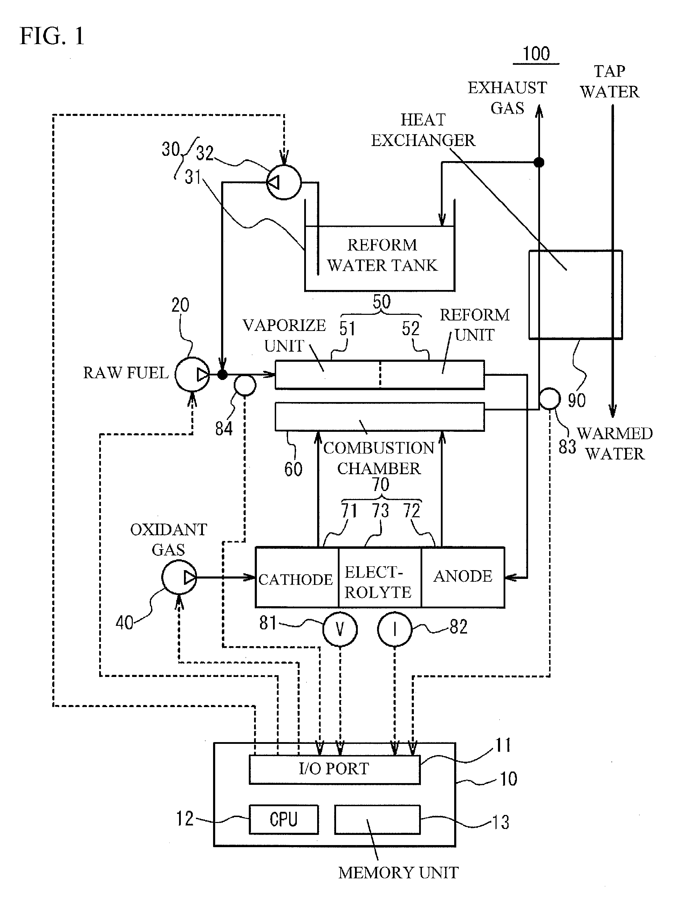

FIG. 1 illustrates a block diagram of an overall structure of a fuel cell system 100 in accordance with a first embodiment. As illustrated in FIG. 1, the fuel cell system 100 has a control unit 10, a raw fuel supply unit 20, a reform water supply unit 30, an oxidant gas supply unit 40, a reformer 50, a combustion chamber 60, a fuel cell 70 and a heat exchanger 90. And, the fuel cell system 100 has a voltage sensor 81, a current sensor 82, an oxygen concentration sensor 83, and a pressure sensor 84, as a sensor unit.
The control unit 10 is structured with a CPU (Central Processing Unit), a ROM (Read Only Memory), RAM (Random Access Memory), an interface and so on, and has an input-output port 11, a CPU 12, a memory unit 13 and so on. The input-output port 11 is an interface between the control unit 10 and each component. The memory unit 13 is a memory including a ROM storing a program which the CPU 12 executes, a RAM storing a variable number used for calculation and so on.
The raw fuel supply unit 20 includes a fuel pump for supplying a raw fuel such as hydrocarbon to the reformer 50. The reform water supply unit 30 includes a reform water tank 31 for storing reform water used for steam-reforming reaction in the reformer 50, a reform water pump 32 for supplying reform water stored in the reform water tank 31 to the reformer 50, and so on. The oxidant gas supply unit 40 includes an air pump for supplying oxidant gas such as air or the like to a cathode 71 of the fuel cell 70. The reformer 50 includes a vaporize unit 51 for vaporizing the reform water and a reform unit 52 for generating fuel gas through the steam-reforming reaction.
The fuel cell 70 has a structure in which an electrolyte 73 is sandwiched by the cathode 71 and an anode 72.

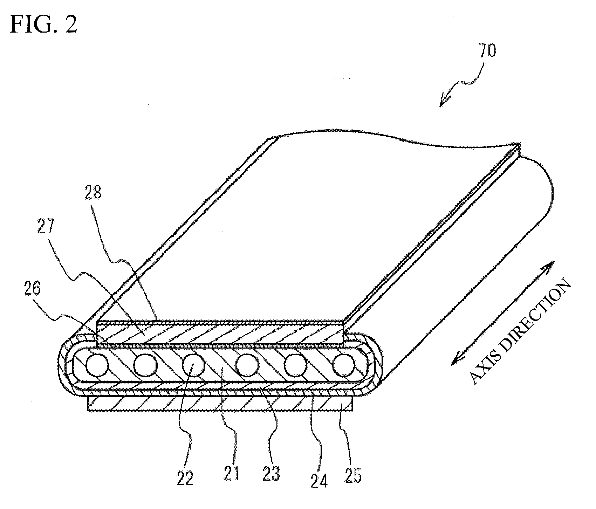

FIG. 2 illustrates a partial perspective view of a fuel cell 74 structuring the fuel cell 70 including a cross sectional view of the fuel cell 74. As illustrated in FIG. 2, the fuel cell 74 has an overall shape of a flat plate column. In a conductive support member 21 having gas permeability, a plurality of fuel gas pathways 22 penetrating the conductive support member 21 are formed along an axis direction (a longitudinal direction). A fuel electrode 23, a solid electrolyte 24 and an oxygen electrode 25 are laminated in this order on one of plane of an outer periphery of the conductive support member 21. An inter connector 27 is provided on the other plane facing the oxygen electrode 25, through a jointing layer 26. A p-type semiconductor layer 28 for reducing a contact resistance is provided on the inter connector 27. The fuel electrode 23 acts as the anode 72 of FIG. 1. The oxygen electrode 25 acts as the cathode 71 of FIG. 1. The solid electrolyte 24 acts as the electrolyte 73 of FIG. 1. The fuel cell 70 may have a stack structure in which a plurality of the fuel cells 74 illustrated in FIG. 2 are stacked.

When reform gas including hydrogen is supplied to the fuel gas pathway 22, hydrogen is supplied to the fuel electrode 23. On the other hand, when oxidant gas including oxygen is supplied to a circumference of the fuel cell 74, oxygen is supplied to the oxygen electrode 25. Thus, the following electrode reaction occurs at the oxygen electrode 25 and the fuel electrode 23, and electrical power is generated. The power generation reaction occurs at 600 degrees C to 1000 degrees C or the like.

Oxygen electrode: $1/2\ O_2 + 2e^- \rightarrow O^{2-}$ (solid electrolyte)

Fuel electrode: $O^{2-}$ (solid electrolyte) $+ H_2 \rightarrow H_2O + 2e^-$

A material of the oxygen electrode 25 has oxidation resistance and is porous so that gaseous oxygen reaches an interface between the oxygen electrode 25 and the solid electrolyte 24. The solid electrolyte 24 has a function of moving an oxygen ion $O^{2-}$ from the oxygen electrode 25 to the fuel electrode 23. The solid electrolyte 24 is composed of an oxygen-ion-conductive oxide. And, the solid electrolyte 24 is stable in an oxidant atmosphere / a reductant atmosphere and is dense in order to physically insulate the oxidant gas from the fuel gas. The fuel electrode 23 is stable in a reductant atmosphere and is composed of a material having affinity with the hydrogen. The inter connector 27 is provided so as to electrically connect the fuel cells 74 in series, and is dense in order to physically insulate the fuel gas from the oxidant gas.

For example, the oxygen electrode 25 is composed of a lanthanum-cobaltite-based complex oxide of a perovskite type having high conductivity with respect to an electron and an ion. The solid electrolyte 24 is composed of $ZrO_2$ (YSZ) including $Y_2O_3$ having high ion-conductivity or the like. The fuel electrode 23 is composed of a mixture of Ni having high electron-conductivity and $ZrO_2$ including $Y_2O_3$ (YSZ) or the like. The inter connector 27 is composed of $LaCrO_3$ or the like having high electron conductivity in which an alkali-earth oxide dissolves. Materials having a thermal expansion coefficient that is close to each other are preferable for the materials.

Next, with reference to FIG. 1, a description will be given of a general operation of the fuel cell system 100 during generating electrical power. The raw fuel supply unit 20 receives an instruction from the control unit 10 and supplies a required amount of raw fuel gas to the reformer 50. The reform water pump 32 receives an instruction from the control unit 10 and supplies a required amount of reform water to the reformer 50. The reform water uses combustion heat of the combustion chamber 60 and vaporizes into steam at the vaporize unit 51. In the reform unit 52, the steam-reforming reaction occurs with use of the combustion heat in the combustion chamber 60. Thus, fuel gas including hydrogen is generated in the reform unit 52. The fuel gas generated in the reform unit 52 is supplied to the anode 72 of the fuel cell 70.

The oxidant gas supply unit 40 receives an instruction from the control unit 10 and supplies a required amount of oxidant gas to the cathode 71 of the fuel cell 70. Thus, the fuel cell 70 generates electrical power. The oxidant off gas exhausted from the cathode 71 and the fuel off gas exhausted from the anode 72 flow into the combustion chamber 60. In the combustion chamber 60, the fuel off gas burns with use of oxygen included in the oxidant off gas. Heat obtained through the burning is supplied to the reformer 50 and the fuel cell 70. Thus, in the fuel cell system 100, a combustible component such as hydrogen or carbon monoxide included in the fuel off gas burns in the combustion chamber 60. The heat exchanger 90 exchanges heat between exhaust gas exhausted from the combustion chamber 60 and tap water flowing in the heat exchanger 90. Condensed water obtained from the exhaust gas through the heat exchanging is stored in the reform water tank 31.

The voltage sensor 81 detects a power-generation voltage of the fuel cell 70 and gives the detection result to the control unit 10. When the fuel cell 70 has a stack structure, the voltage sensor 81 may detect a power-generation voltage of whole of the fuel cell 70 or may detect a power-generation voltage of a unit cell that is a part of the stack. The current sensor 82 detects a power-generation current of the fuel cell 70 and gives the detection result to the control unit 10. The oxygen concentration sensor 83 detects an oxygen concentration in the exhaust gas exhausted from the combustion chamber 60 and gives the detection result to the control unit 10. The pressure sensor 84 detects a pressure of the fuel gas supplied to the anode 72 of the fuel cell 70 and gives the detection result to the control unit 10. In the embodiment, gas pressure in the reformer 50 is detected as anode pressure. The pressure sensor 84 may be provided at any position from the raw fuel supply unit 20 to the anode 72 of the fuel cell 70.

The control unit 10 determines deterioration of the fuel cell 70 according to each detection result of the sensors and changes an operation condition of the fuel cell 70 according to the determination result. Therefore, the control unit 10 acts as an operation condition change unit. A description will be given of the deterioration determination of the fuel cell 70. The deterioration of the fuel cell 70 is, for example, secular change of members of the fuel cell 70.

When the performance of the fuel cell 70 is favorable, amplitude of an input value to the fuel cell 70 is absorbed and initial performance is obtained. That is, the fuel cell 70 in good condition compensates for an output value by discharging excessive amount of the input value previously stored in relatively large capacity condition even if the input value temporarily lacks a slight amount, when an average of the input value satisfies a predetermined value. Therefore, the changing amount of the output value is small. Thus, the fuel cell 70 in good condition has a function of a buffer. However, as the deterioration of the fuel cell 70 proceeds, the amplitude of the input value to the fuel cell 70 is not absorbed, and the amplitude of the output value of the fuel cell 70 get larger. Therefore, it is possible to determine the deterioration of the fuel cell 70 with use of the phenomenon.

For example, an amount or a pressure of reaction gas supplied to the fuel cell 70 may be used as the input value to the fuel cell 70. At least one of an amount of fuel gas or an amount of oxidant gas supplied to the fuel cell 70 may be used as the amount of the reaction gas. An amount of raw fuel supplied to the reformer 50 determines an amount of the fuel gas. Therefore, it is possible to obtain the amount of the reaction gas from the amount of the raw fuel. For example, the amount of the raw fuel supplied to the reformer 50 from the raw fuel tank may be used. The amount of the raw fuel supplied to the reformer 50 from a city gas pipe may be used. At least one of the anode pressure or the cathode pressure may be used as the pressure of the reaction gas.

However, there are many cases where air is used as the oxidant gas in view of running cost. The air includes many components other than oxygen. Therefore, a volume of oxidant gas is needed in the power generation, compared to the fuel gas. In this case, the influence of the amount or the pressure of the oxidant gas with respect to the output value of the fuel cell 70 gets smaller than the fuel gas. Therefore, it is preferable that the anode pressure or the amount of the fuel gas is used as the input value to the fuel cell 70.

In order to change the amount of the reaction gas, it is necessary to increase the number of operation of an actuator or the like. In this case, it is necessary to consider the durability of the actuator. It is therefore preferable that the pressure of the reaction gas is used as the input value to the fuel cell 70, compared to the amount of the reaction gas. When a reformer performing the steam-reforming reaction with use of steam generated by vaporization of the reform water is provided, it is possible to use bumping of the reform water. In this case, it is possible to change the anode pressure easily. It is therefore preferable that the reformer using the steam generated by the vaporization of the reform water is provided.

A power-generation current, a power-generation voltage, or a power-generation electrical power of the fuel cell 70 can be used as the output value of the fuel cell 70. In this case, the power-generation condition of the fuel cell 70 can be directly used as an index. It is relatively difficult to detect the performance deterioration of the fuel cell 70 caused by deterioration of gas distribution in the power-generation condition. Specifically, during the low-load operation of the fuel cell 70, it is difficult to detect the performance deterioration of the fuel cell 70 in the power-generation condition. However, when the gas distribution is degraded, the anode off gas may get uneven. For example, when the anode off gas is not enough because of the deterioration of the gas distribution, fire is put out in the combustion chamber 60 and the oxygen concentration in the exhaust gas increases. Therefore, in view of the deterioration of the gas distribution or the like, the oxygen concentration in the exhaust gas can be used as the output value of the fuel cell 70.

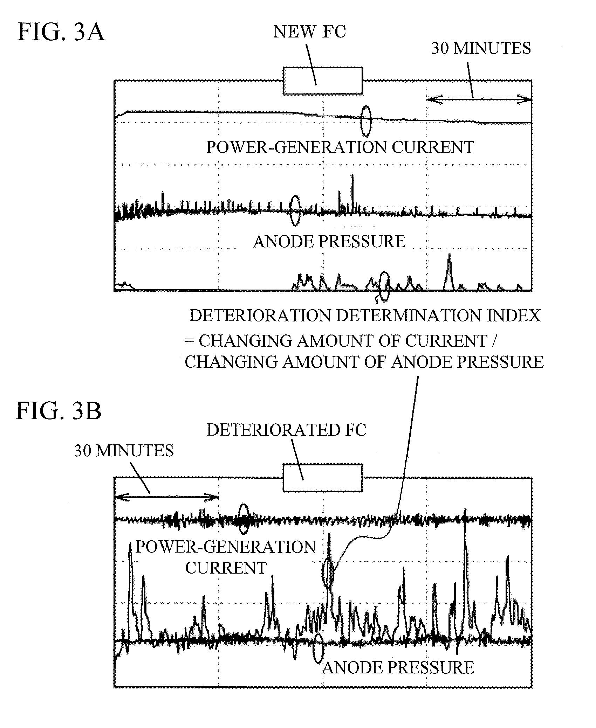

FIG. 3A and FIG. 3B illustrate a relation between the anode pressure and the power-generation current of the fuel cell 70. FIG. 3A illustrates a result of the fuel cell 70 that is not deteriorated. FIG. 3B illustrates a result of the fuel cell 70 that is deteriorated. In FIG. 3A and FIG. 3B, a horizontal axis indicates a transit time, and a vertical axis indicates the anode pressure, the power-generation current and the index for determining deterioration. In FIG. 3A and FIG. 3B, (fluctuation of the power-generation current) / (fluctuation of the anode pressure) is used as the index for determining deterioration.

As illustrated in FIG. 3A, in the fuel cell 70 that is not deteriorated, the power-generation current hardly fluctuates even if the anode pressure fluctuates. Therefore, in the example of FIG. 3A, a difference between the amplitude value of the anode pressure and the amplitude value of the power-generation current is large. In contrast, as illustrated in FIG. 3B, in the fuel cell 70 that is deteriorated, the power-generation current fluctuates greatly according to the fluctuation of the anode pressure. Therefore, in the example of FIG. 3B, the difference between the amplitude of the anode pressure and the amplitude value of the power-generation current is small. With respect to other input values and other output values of the fuel cell 70, the same results as FIG. 3A and FIG. 3B are obtained. Therefore, it is possible to determine the deterioration of the fuel cell 70 with use of the amplitude value of the input value and the amplitude value of the output value of the fuel cell 70.

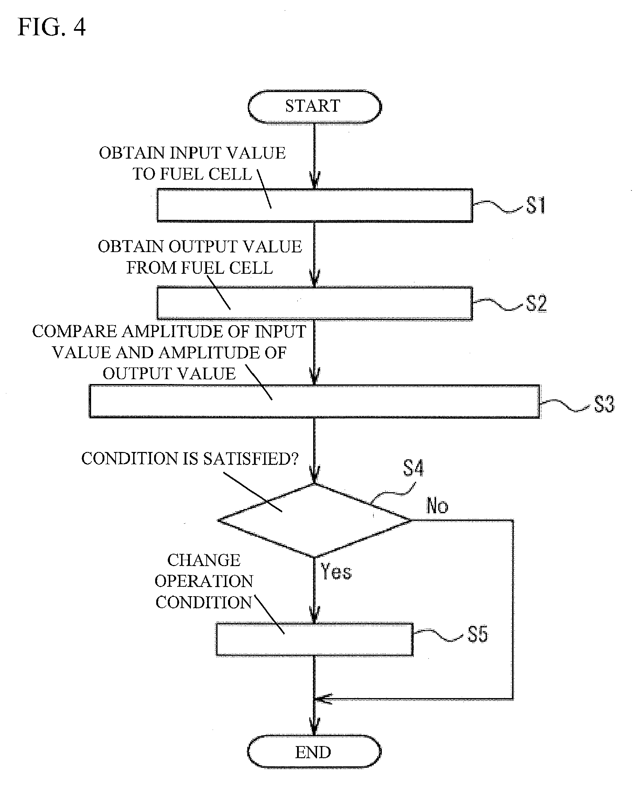

FIG. 4 illustrates an example of a flowchart that is executed when the deterioration of the fuel cell 70 is determined. First, the CPU 12 obtains an input value to the fuel cell 70 (Step S1). Next, the CPU 12 obtains an output value from the fuel cell 70 (Step S2). Next, the CPU 12 compares the amplitude value of the input value and the amplitude value of the output value (Step S3).

Next, the CPU 12 determines whether a result of the comparison of the Step S3 satisfies a predetermined condition or not (Step S4). In the Step S4, it may be determined whether a plurality of input values and a plurality of output values satisfy a predetermined condition together with each other. In this case, determination accuracy of the deterioration gets higher. When it is determined as "Yes" in the Step S4, the CPU 12 changes an operation condition of the fuel cell 70 (Step S5). After that, the CPU 12 terminates the flow chart. When it is determined as "No" in the Step S4, the CPU 12 terminates the flow chart. In accordance with the flow chart of FIG. 4, it is possible to set an adequate operation condition according to the deterioration of the fuel cell 70.

For example, the maximum power-generation electrical power of the fuel cell 70 may get lower because of the deterioration. And so, it is possible to restrain that the fuel cell 70 is subjected to excessive load, by reducing a rated output of the fuel cell 70. And, at least one of the amount of the fuel gas supplied to the fuel cell 70 from the reformer 50 and the amount of the oxidant gas supplied to the fuel cell 70 from the oxidant gas supply unit 40 may be increased. In this case, it is possible to compensate for the lacking power-generation electric power caused by the deterioration.

A description will be given of a concrete example of the comparison of the amplitude value of the input value and the amplitude value of the output value of the fuel cell 70. For example, with reference to the results of FIG. 3A and FIG. 3B, it may be determined that the fuel cell 70 is deteriorated, when the difference between the amplitude value of the input value and the amplitude value of the output value is a predetermined value or less. The amplitude value may be an average of the amplitude of a predetermined period, or may be the amplitude of a specific wave shape (for example, the maximum amplitude).

When the comparison of the amplitude values is difficult, a multiplied value of each amplitude value or a divided value of each amplitude value may be used. For example, the above-mentioned deterioration determination index may be used. In the example of FIG. 3A, the deterioration determination index is hardly detected, because the power-generation current hardly fluctuates. In contrast, in the example of FIG. 3B, the deterioration determination index is enlarged, because the power-generation current fluctuates according to the fluctuation of the anode pressure. Therefore, when the deterioration determination index is equal to a predetermined value or more, it may be determined that the fuel cell 70 is deteriorated.

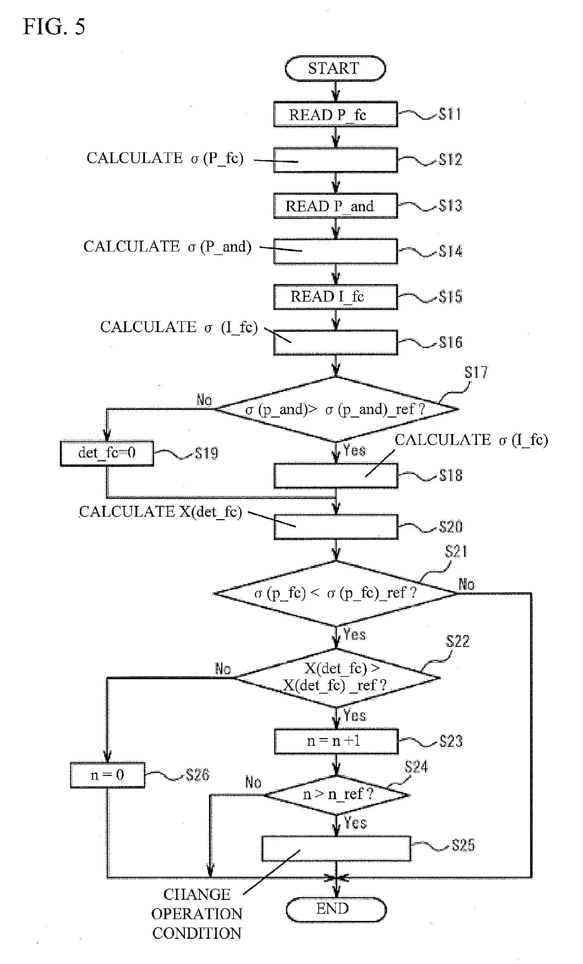

FIG. 5 illustrates an example of a flowchart of a concrete example of the comparison of the amplitude value of the input value and the amplitude value of the output value of the fuel cell 70. The flow chart of FIG. 5 is executed periodically, and is executed every one second, for example. First, the CPU 12 reads a power-generation electrical power $P\_fc$ of the fuel cell 70 according to the detection results of the voltage sensor 81 and the current sensor 82 and stores the power-generation electrical power $P\_fc$ in the memory unit 13 (Step S11).

Next, the CPU 12 calculates a power-generation-transient-state determination index $\sigma(P\_fc)$ and stores the power-generation-transient-state determination index $\sigma(P\_fc)$ in the memory unit 13 (Step S12). The power-generation-transient-state determination index $\sigma(P\_fc)$ is an index for determining whether the required power-generation electrical power of the fuel cell 70 is changed or not. For example, a moving average value of a standard deviation of the power-generation electrical power $P\_fc$ may be used as the power-generation-transient-state determination index $\sigma(P\_fc)$. The above-mentioned moving average value may be expressed as the following formula (1). The standard deviation is calculated based on the power-generation electrical power $P\_fc$ stored in the memory unit 13, and is, for example, calculated from fifty or so of the power-generation electric powers $P\_fc$ stored previously. Each coefficient of a right side of the formula (1) is not limited to the following value. "previous time" means during the previous execution of the flow chart. "this time" means during the execution of the flow chart of this time.

$$\sigma(P\_fc) = 1/4 \cdot [\sigma(P\_fc) \text{ of previous time}] + 3/4 \cdot [\text{standard deviation of this time}] \qquad (1)$$

Next, the CPU 12 reads an anode pressure $P\_and$ based on the detection result of the pressure sensor 84 and stores the anode pressure $P\_and$ in the memory unit 13 (Step S 13). Next, the CPU 12 calculates a standard deviation $\sigma(P\_and)$ of the anode pressure $P\_and$ and stores the standard deviation $\sigma(P\_and)$ in the memory unit 13 (Step S 14). The standard deviation $\sigma(P\_and)$ is calculated based on the anode pressure $P\_and$ stored in the memory unit 13, and is, for example, calculated from fifty or so of the anode pressures $P\_and$ detected previously.

Next, the CPU 12 reads a power-generation current $I\_fc$ of the fuel cell 70 based on the detection result of the current sensor 82 and stores the power-generation current $I\_fc$ in the memory unit 13 (Step S15). Next, the CPU 12 calculates a standard deviation $\sigma(I\_fc)$ of the power-generation current $I\_fc$ and stores the standard deviation $\sigma(I\_fc)$ in the memory unit 13 (Step S16). The standard deviation $\sigma(I\_fc)$ is calculated based on the power-generation current $I\_fc$ stored in the memory unit 13, and is, for example, calculated from fifty or so of the power-generation currents $I\_fc$ detected previously.

Next, the CPU 12 determines whether the standard deviation $\sigma(P\_and)$ is more than a reference value $\sigma(P\_and)\_ref$ of the standard deviation $\sigma(P\_and)$ (Step S 17). The reference value $\sigma(P\_and)\_ref$ is not specifically limited.

The reference value $\sigma(P\_and)\_ref$ is, for example, set to be 0.01 or the like. If it is determined as "Yes" in the Step S 17, the CPU 12 calculates a det_fc in accordance with the following formula (2) (Step S18). If it is determined as "No" in the Step S 17, the CPU 12 sets the det_fc to be zero (Step S 19). Through the execution of the Step S 19, it is restrained that the det_fc gets larger when the fluctuation of the anode pressure is small. Therefore, erroneous determination is restrained.

$$\mathrm{det\_fc} = \sigma(\mathrm{I\_fc}) / \sigma(\mathrm{P\_and}) \qquad (2)$$

After the execution of the Step S18 or the Step S 19, the CPU 12 calculates a deterioration determination index X(det_fc) (Step S20). The deterioration determination index X(det_fc) may be equal to the det-fc. In the flowchart, the deterioration determination index X(det_fc) is a moving average value of the det_fc. The deterioration determination index X(det_fc) may be expressed as the following formula (3). Each coefficient of a right side of the formula (3) is not limited to the value.

$$\mathrm{X(det\_fc)} = 31/32 \cdot [\text{previous X(det\_fc)}] + 1/32 \cdot [\text{det\_fc of this time}] \qquad (3)$$

Next, the CPU 12 determines whether the power-generation-transient-state determination index $\sigma(P\_fc)$ is less than the reference value $\sigma(P\_fc)\_ref$ (Step S21). The reference value $\sigma(P\_fc)\_ref$ is not specifically limited. For example, the reference value $\sigma(P\_fc)\_ref$ is set to be "2" or so. If it is determined as "No" in the Step S21, the CPU 12 terminates the execution of the flowchart. In this case, the deterioration determination of the fuel cell 70 in the case where the power generation of the fuel cell 70 is in the transient state is not performed. Therefore, erroneous determination of the deterioration of the fuel cell 70 is retrained.

If it is determined as "Yes" in the Step S21, the CPU 12 determines whether the deterioration determination index X(det_fc) is more than the reference value X(det_fc)_ref (Step S22). If it is determined as"Yes" in the Step S22, the CPU 12 adds "1" to the deterioration determination counter "n" (Step S23). Next, the CPU 12 determines whether the deterioration determination counter "n" is more than a reference value n_ref (Step S24). The reference value n_ref is not specifically limited. For example, the reference value n_ref is set to be 120 or so. If the flowchart is executed every one second, the reference value n_ref=120 means two minutes. The Step S24 is a step in which it is determined as "deterioration" only when the deterioration determination index X(det_fc) is more than the reference value X(det_fc)_ref for a predetermined time and the erroneous determination is restrained.

If it is determined as "Yes" in the Step S24, the CPU 12 changes the operation condition of the fuel cell 70 (Step S25). After that, the CPU 12 terminates the execution of the flowchart. If it is determined as "No" in the Step S24, the CPU 12 terminates the flowchart without executing the Step S25. If it is determined as "No" in the Step S22, the CPU 12 sets the deterioration determination counter "n" to be zero (Step S25). After that, the execution of the flowchart is terminated.

Even if the relation "n > n_ref" is not satisfied in the Step S 14, when the count of 100 or more is detected three times or more, the memory unit 13 may store the history as a secret code. In this case, if the above-mentioned history is stored as the secret code in the memory unit 13 during a periodic check, a check stricter than an ordinary check may be performed.

In accordance with the flowchart of FIG. 5, according to the comparison of the amplitude of the input value and the amplitude of the output value of the fuel cell 70, the operation condition of the fuel cell 70 may be changed. The erroneous determination during the comparison may be restrained. In the flowchart of FIG. 5, the anode pressure is used as the input value of the fuel cell 70, and the power-generation current is used as the output value of the fuel cell 70. However, the values are not limited. For example, as mentioned above, the flow rate of the fuel gas, the flow rate of the oxidant gas, the pressure of the oxidant gas or the like may be used as the input value to the fuel cell 70. The power-generation electrical power, the power-generation current, the power-generation voltage, the oxygen concentration in the exhaust gas or the like may be used as the output value of the fuel cell 70.

(Second Embodiment)

The deterioration of the fuel cell 70 may be determined without changing the operation condition of the fuel cell 70. For example, when the deterioration is determined during the periodic check, the fuel cell 70 may be exchanged after the check. In this case, the power generation of the fuel cell 70 may be unneeded after the deterioration determination. Therefore, it has only to be determined whether the exchange of the fuel cell 70 is necessary or not. And so, in the second embodiment, a description will be given of deterioration determination of the fuel cell 70 without changing the operation condition.

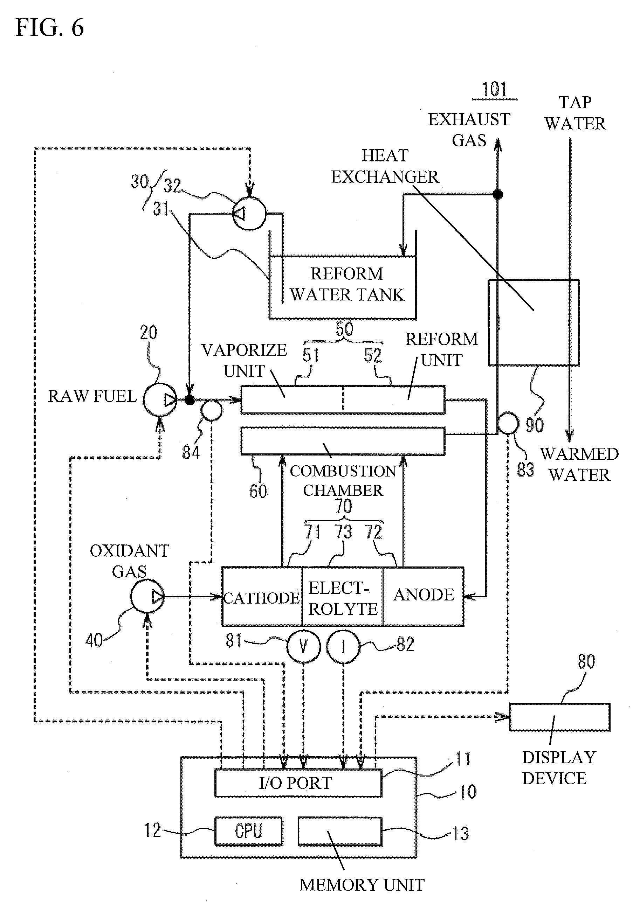

FIG. 6 illustrates a block diagram of an overall structure of a fuel cell system 101 in accordance with the second embodiment. The fuel cell system 101 is different from the fuel cell system 100 of FIG. 1 in a point that a display device 80 is further provided. For example, the display device 80 shows information promoting a check to a user when it is determined that the fuel cell 70 is deteriorated. Therefore, the fuel cell 70 may be exchanged promptly.

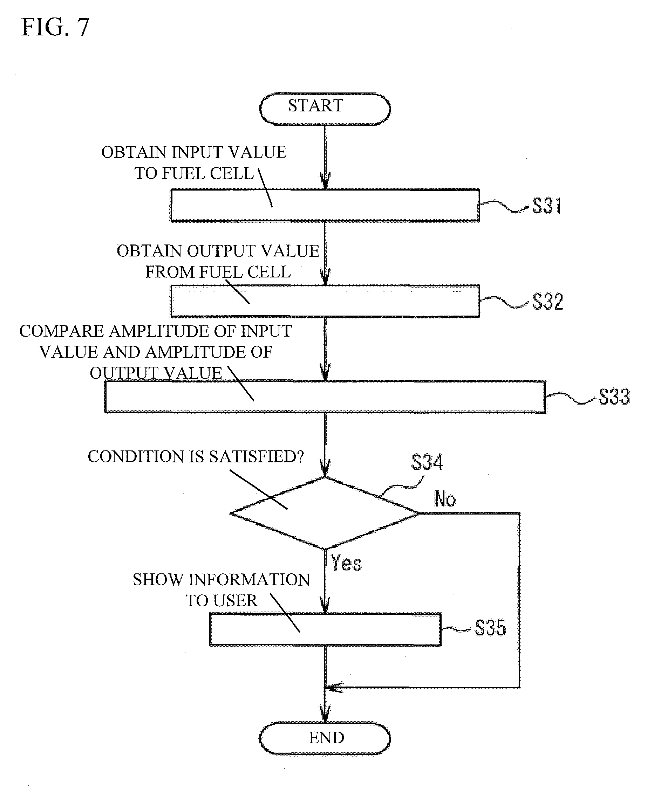

FIG. 7 illustrates an example of a flowchart for determining the deterioration of the fuel cell 70. First, the CPU 12 obtains the input value to the fuel cell 70 (Step S31). Next, the CPU 12 obtains the output value from the fuel cell 70 (Step S32). Next, the CPU 12 compares the amplitude of the input value with the amplitude of the output value (Step S33).

Next, the CPU 12 determines whether the comparison result of the Step S33 satisfies a predetermined condition or not (Step S34). If it is determined as "Yes" in the Step S34, the CPU 12 makes the display device 80 show information such as component exchange to the user (Step S35). After that, the CPU 12 terminates the flowchart. If it is determined as "No" in the Step S34, the CPU 12 terminates the flowchart. In accordance with the flowchart of FIG. 7, it is possible to show adequate information to the user, according to the deterioration of the fuel cell 70.

The first embodiment and the second embodiment may be applied to other type fuel cells such as a solid polymer type, a solid oxide type, or a molten carbonate type. However, with respect to a fuel cell such as the solid oxide type using a reaction gas of high temperature, amplitude of an input value is large. Therefore, the comparison of the amplitude of the input value with the amplitude of the output value is easy. Therefore, in particular, the above-mentioned embodiments are effective for a solid oxide fuel cell. The display device 80 of the second embodiment may be used in the first embodiment. In this case, the operation condition may be changed and the exchange of the fuel cell 70 may be promoted, according to the deterioration determination.

(Third Embodiment)

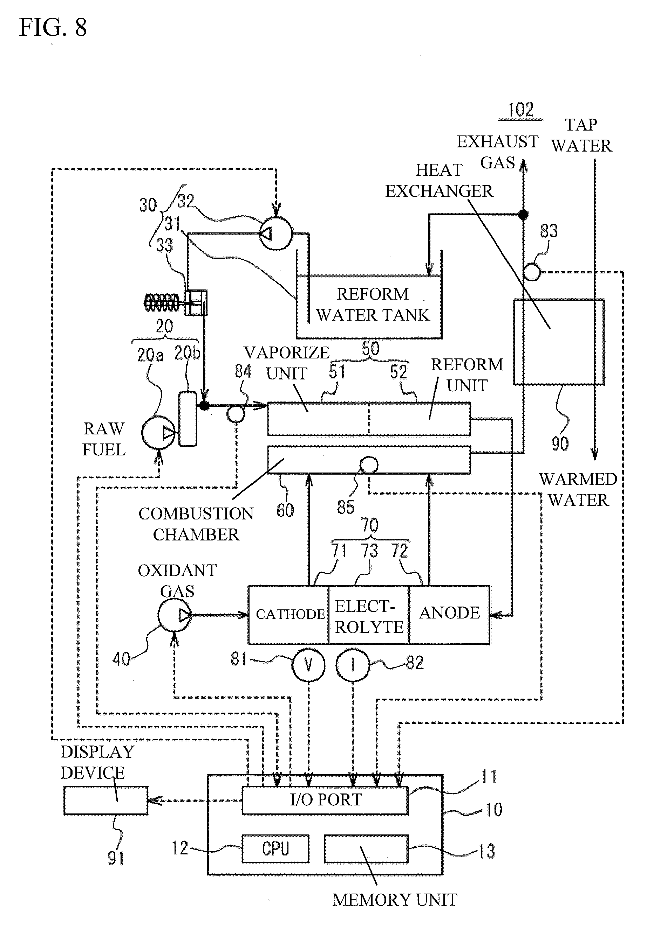

FIG. 8 illustrates a block diagram of an overall structure of a fuel cell system 102 in accordance with a third embodiment. As illustrated in FIG. 8, in the fuel cell system 102, the reform water supply unit 30 has a regulating valve 33 for regulating a supply amount of the reform water supplied to the reformer 50. The raw fuel supply unit 20 has a raw fuel pump 20a for supplying raw fuel such as hydrocarbon to the reformer 50, a desulfurizer 20b for removing a sulfuric component in the raw fuel, or the like. And, there is provided a temperature sensor 85 provided at a given position in the combustion chamber 60.

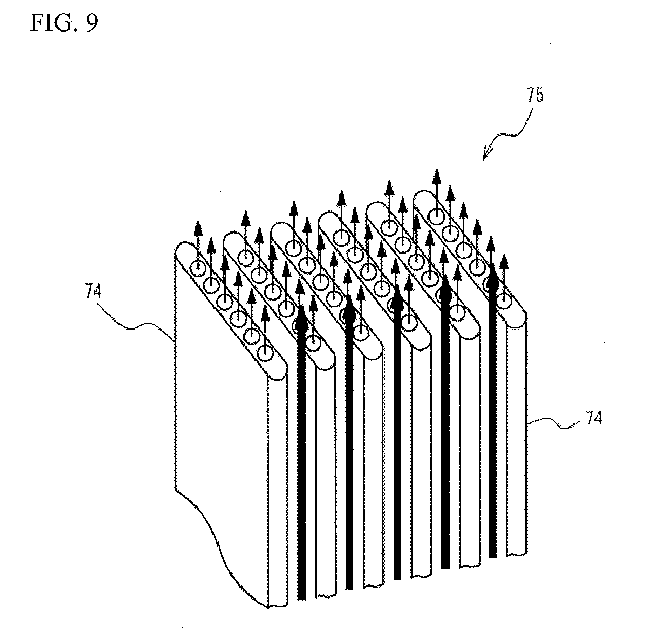

FIG. 9 illustrates a perspective view of a fuel cell stack 75 in the fuel cell 70. In the fuel cell stack 75, a plurality of fuel cells 74 are stacked with a collector member being sandwiched by each fuel cell 74. Each of the fuel cells 74 is stacked so that a fuel electrode 43 faces an oxygen electrode 45. In FIG. 9, a thin arrow indicates a flow of the fuel gas, and a thick arrow indicates a flow of the oxidant gas.

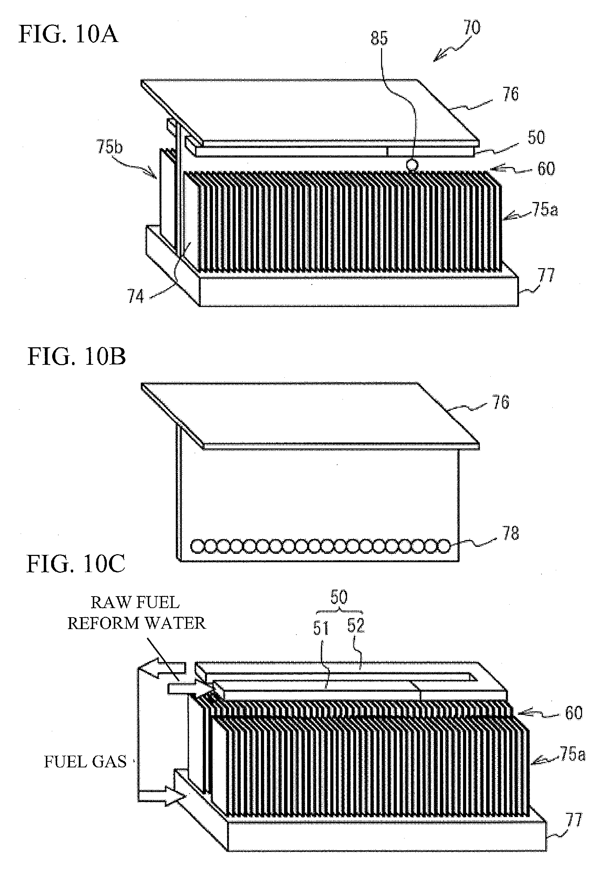

FIG. 10A illustrates a perspective view of an overall structure of the fuel cell 70. FIG. 10B illustrates a perspective view of an oxidant gas guide member 76 extracted from the fuel cell 70 illustrated in FIG. 10A. As illustrated in FIG. 10A, in the fuel cell 70, two groups of fuel cell stacks 75a and 75b (the fuel cell 74) are arrayed in parallel on a manifold 77 so that stacking directions of the fuel cell stacks 75a and 75b are in parallel with each other. The fuel cell stacks 75a and 75b have a structure in which a plurality of fuel cells 74 of solid polymer type are stacked.

In the manifold 77 of FIG. 10A, a hole communicated with a fuel gas pathway 42 of each fuel cell 74 is formed. Therefore, the fuel gas flowing in the manifold 77 flows into the fuel gas pathway 42. The reformer 50 is located in opposite to the manifold 77 with respect to the fuel cell stacks 75a and 75b. For example, the reformer 50 extends along the stacking direction of one of the fuel cell stacks, returns back at a first end, and extends along the stacking direction of the other fuel cell stack. In the embodiment, the fuel cell stack 75a is located on the side of the reform water inlet of the reformer 50, and the fuel cell stack 75b is located on the side of the fuel gas outlet.

And, as illustrated in FIG. 10B, the oxidant gas guide member 76 is located between the fuel cell stack 75a and the fuel cell stack 75b. The oxidant gas guide member 76 has a space in which the oxidant gas flows. A hole 78 is formed at the end of the oxidant gas guide member 76 on the side of the manifold 77. Thus, the oxidant gas flows out of each fuel cell 74. The fuel cell 74 generates electrical power when the fuel gas flows in the fuel gas pathway 42 of the fuel cell 74 and the oxidant gas flows out of the fuel cell 74.

The fuel gas after subjected to the power generation of the fuel cell 74 (the fuel off gas) and the oxidant gas after subjected to the power generation (the oxidant off gas) join together at an end of the each fuel cell 74 that is opposite to the manifold 77. The fuel off gas includes a combustible component such as unburned hydrogen. Therefore, the fuel off gas burns with use of the oxygen included in the oxidant off gas. In the embodiment, the combustion chamber 60 is a space in which the fuel off gas burns between an upper end of the fuel cell 74 (the fuel cell stacks 75a and 75b) and the reformer 50.

A portion of the reformer 50 on the side of upstream acts as the vaporize unit 51, and a portion of the reformer 50 on the side of downstream acts as the reform unit 52. As illustrated in FIG. 10C, when the raw fuel such as hydrocarbon and the reform water are supplied to the reformer 50, the reform water vaporizes and steam is generated in the vaporize unit 51, and the generated steam and the raw fuel such as the hydro carbon are mixed. In the reform unit 52, the steam and the raw fuel such as the hydrocarbon react in the presence of a catalyst, and the fuel gas is generated.

Next, with reference to FIG. 8, a description will be given of a summary of the operation of the fuel cell system 102 during the power generation. The raw fuel pump 20a supplies a required amount of the raw fuel to the reformer 50 via the desulfurizer 20b in accordance with a control command value from the control unit 10. The control command value given to the raw fuel pump 20a is stored in the memory unit 13. The reform water pump 32 supplies a required amount of the reform water to the regulating valve 33 in accordance with a control command value from the control unit 10. The control command value given to the reform water pump 32 is stored in the memory unit 13. The regulating valve 33 supplies a required amount of the reform water in accordance with the control command value from the control unit 10. The control command value received by the regulating valve 33 is stored in the memory unit 13.

The oxidant gas supply unit 40 supplies a required amount of the oxidant gas to the cathode 71 in accordance with the control command value from the control unit 10. Thus, the fuel cell 70 generates electrical power. The control command value given to the oxidant gas supply unit 40 is stored in the memory unit 13.

The voltage sensor 81 detects the power-generation voltage of one or more fuel cell 74 included in the fuel cell 70, and gives the detected result to the control unit 10. When the voltage sensor 81 detects a plurality of fuel cells 74, the plurality of fuel cells 74 may be successive or may not be successive. And, the voltage sensor 81 may detect the power-generation voltage of all of the fuel cells 74 included in the fuel cell 70. The detection result of the voltage sensor 81 is stored in the memory unit 13.

The temperature sensor 85 detects the temperature inside of the combustion chamber 60, and gives the detection result to the control unit 10. As described with reference to FIG. 10, The combustion chamber 60 is a space between the fuel cell stack 75 and the reformer 50. Detecting the temperature inside of the combustion chamber 60 may be taken as detecting the temperature of the fuel cell stack 75. The pressure sensor 84 detects the pressure of the fuel gas supplied to the anode 72 of the fuel cell 70, and gives the detection result to the control unit 10. The detection result of the pressure sensor 84 is stored in the memory unit 13.

The control unit 10 determines abnormality of an auxiliary device of the fuel cell 70 according to the detection result of each sensor, and makes an information device 91 inform the determination result. The information device 91 may be a display device such as a display, or may be an audio output device. Alternatively, the control unit 10 changes the operation condition of the fuel cell 70 based on the above-mentioned determination result. Therefore, the control unit 10 acts as a determination unit, and acts as an operation-condition change unit. In the following description, the abnormality determination of the auxiliary device of the fuel cell 70 is described.

The auxiliary device of the fuel cell 70 includes a supply amount control device for controlling a supply amount of a fluid that is needed for supplying a required amount of the fuel gas and the oxidant gas (hereinafter referred to as reaction gas together with each other) to the fuel cell 70. In the embodiment, the oxidant gas supply unit 40 for supplying a required amount of the oxidant gas to the fuel cell 70 is included in the supply amount control device. And, in the embodiment, the reformer 50 generates a required amount of the fuel gas. Therefore, the raw fuel pump 20a for supplying a required amount of the raw fuel and the regulating valve 33 for supplying a required amount of the reform water to the reformer 50 are included in the supply amount control device. When a hydrogen tank is provided instead of the reformer, a flow-amount regulating valve for controlling the amount of the fuel gas supplied to the fuel cell 70 from the hydrogen tank or the like is included in the supply amount control device.

And, the auxiliary device of the fuel cell 70 includes a sensor for detecting property of the reaction gas and the fuel off gas and the oxidant off gas (hereinafter referred to as reaction off gas) exhausted from the fuel cell 70 and a sensor for detecting the output of the fuel cell 70. The output of the fuel cell 70 includes an electrical output and a heat amount. In the embodiment, the sensor for detecting the property of the reaction gas and the reaction off gas includes the temperature sensor 85, the oxygen concentration sensor 83, and the pressure sensor 84. The sensor for detecting the electrical output of the fuel cell 70 includes the voltage sensor 81 and the current sensor 82. And, the sensor for detecting the heat amount of the fuel cell 70 includes the temperature sensor 85.

The supply amount control device is capable of controlling supply amount of the fluid within an error range according to the control command value input from the control unit 10, when the supply amount control device is normal. However, the above-mentioned supply amount control device is not capable of maintaining a target supply amount according to the control command value input from the control unit 10, when there is an abnormality of the supply amount control device. The sensor for detecting the property of the reaction gas and the reaction off gas is capable of detecting the property of the reaction gas and the reaction off gas within an error range, when the sensor is normal. However, the detected value is out of the error range, when there is an abnormality of the sensor for detecting the property of the reaction gas and the reaction off gas. The sensor for detecting the output of the fuel cell 70 is capable of detecting the output of the fuel cell 70 within an error range, when the sensor is normal. However, the detected value is out of the error range, when there is an abnormality of the sensor for detecting the output of the fuel cell 70. It is possible to determine the abnormality of the auxiliary device of the fuel cell 70, with use of these phenomena.

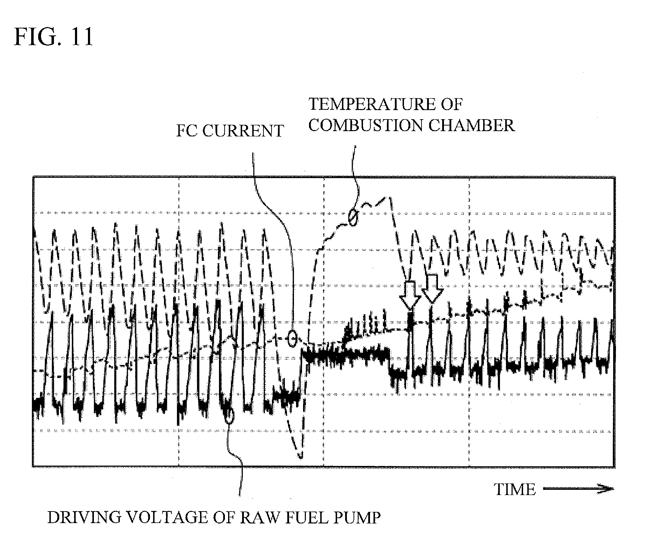

Here, it is assumed that an add signal having predetermined amplitude is overlapped with a control command value input to the supply amount control device. In this case, predetermined amplitude appears in the detected value detected by a normal sensor. FIG. 11 illustrates a driving voltage of the raw fuel pump 20a as an example of a control command value input to the supply amount control device, and illustrates a power-generation current detected by the current sensor 82 and a temperature value detected by the temperature sensor 85 as the detected value of the sensor.

A vertical axis of FIG. 11 indicates an elapse time. And, FIG. 11 illustrates a case where the raw fuel pump 20a, the current sensor 82 and the temperature sensor 85 are normal.

When the amount of the raw fuel fluctuates, the amount of the generated fuel gas fluctuates. Thus, the power-generation current of the fuel cell 70 fluctuates. Further, when the raw fuel amount fluctuates, the amount of combustible component included in the fuel off gas fluctuates. Thus, the temperature inside of the combustion chamber 60 fluctuates. Therefore, as illustrated in FIG. 11, if the raw fuel pump 20a, the current sensor 82 and the temperature sensor 85 are normal, amplitude appears in the power-generation current detected by the current sensor 82 and the temperature value detected by the temperature sensor 85 when amplitude is added to the driving voltage of the raw fuel pump 20a.

However, the responsibility of the sensor may be deteriorated when there is an abnormality of the sensor. Therefore, the amplitude in the detected value detected by the sensor having the abnormality gets smaller. And, the response of the supply amount control device may be deteriorated when there is an abnormality of the supply amount control device. Therefore, when there is an abnormality of the supply amount control device, the amplitude in the detected value detected by the sensor gets smaller. As mentioned above, it is possible to determine whether there is an abnormality in at least one of the supply amount control device and the sensor by obtaining the relation between the amplitude overlapped with the control command value given to the supply amount control device and the amplitude of the detected value detected by the sensor. For example, it is possible to determine that at least one of the supply amount control device and the sensor has an abnormality, when a gap degree of the ratio between the amplitude of the control command value and the detected value of the sensor with respect to the reference value is more than a predetermined value or less than a predetermined value. The case where the gap degree is more than the predetermined value is a case where the above-mentioned ratio is more than the reference value. The case where the gap degree is less than the predetermined value is a case where the above-mentioned ratio is less than the reference value. The determination accuracy of the deterioration is improved, if the standard deviation of the amplitude of the control command value and the standard deviation of the amplitude of the detected value of the sensor are used when the ratio between the amplitude of the control command value and the amplitude of the detected value of the sensor is obtained.

However, there may be variability in the detected value of the sensor because of unexpected factor. And so, in the embodiment, an add signal in which predetermined amplitude repeats with a predetermined period is overlapped with the control command value. Thus, it is possible to determine whether there is an abnormality of the supply amount control device and the sensor, without the variability or the error of the detected value of the sensor. In the case where the pressure sensor 84 is used as the sensor, the supply amount control device does not include the oxidant gas supply unit 40, because it is necessary that amplitude appears in the detected value of the sensor when the amplitude is overlapped with the control command value given to the supply amount control device.

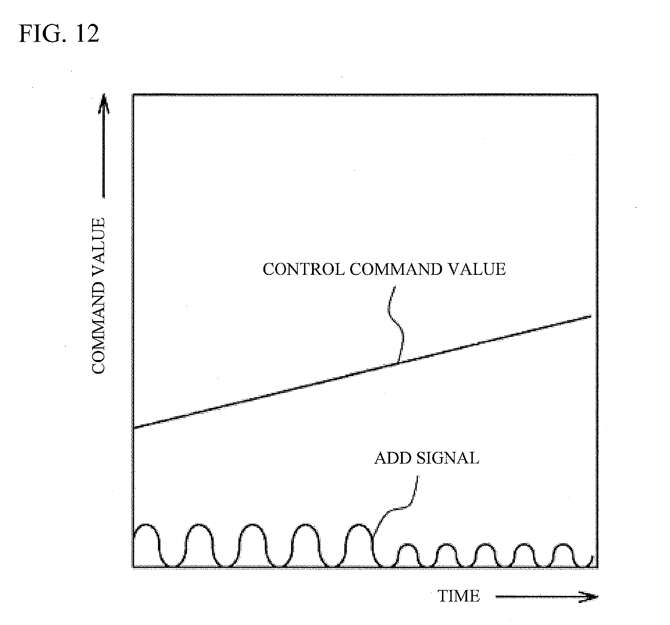

FIG. 12 illustrates an example of the control command value and the add signal. As illustrated in FIG. 12, the add signal repeats amplitude with a predetermined period. The control unit 10 adds the add signal to the control command value. Therefore, the control unit 10 acts as an overlap unit. The add signal may have a plurality types of amplitude. In this case, the determination accuracy of the abnormality of the auxiliary device is improved. For example, it is possible to determine whether there is an abnormality of the supply amount control device or the sensor by using the add signal having large amplitude. It is possible to determine whether a resolution performance of the supply amount control device or the sensor gets lower or not by using the add signal having small amplitude. As an example, the small amplitude may be approximately 2% of the control command value. The large amplitude may be approximately 10 % of the control command value.

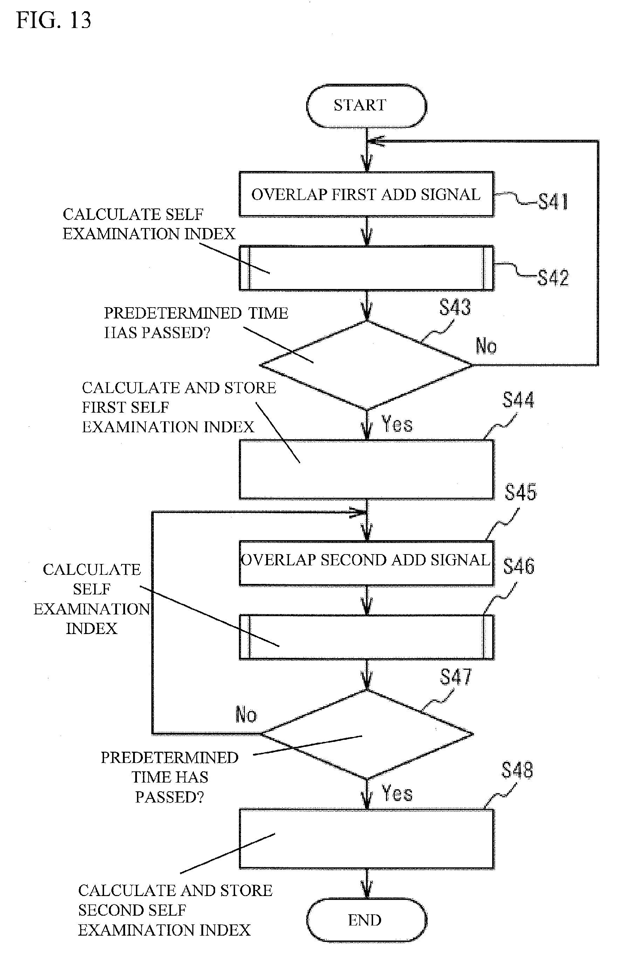

FIG. 13 illustrates an example of a flowchart executed when the relation between the amplitude of the control command value given to the supply amount control device and the amplitude of the detected value of the sensor is obtained, in the case where the supply amount control device and the sensor are normal. The flowchart of FIG. 13 is executed after accumulated time of the power generation of the fuel cell 70 is approximately over 100 hours after the fuel cell system 102 is started.

First, the control unit 10 adds a first add signal to a control command value given to any supply amount control device (Step S41). In the embodiment, the supply amount control device is one of the raw fuel pump 20a, the regulating valve 33 and the oxidant gas supply unit 40. The first add signal is a signal having amplitude so that detectable amplitude barely appears in the detected value of the objective sensor. In the embodiment, the objective sensor is one of the voltage sensor 81, the current sensor 82, the oxygen concentration sensor 83, the pressure sensor 84, and the temperature sensor 85.

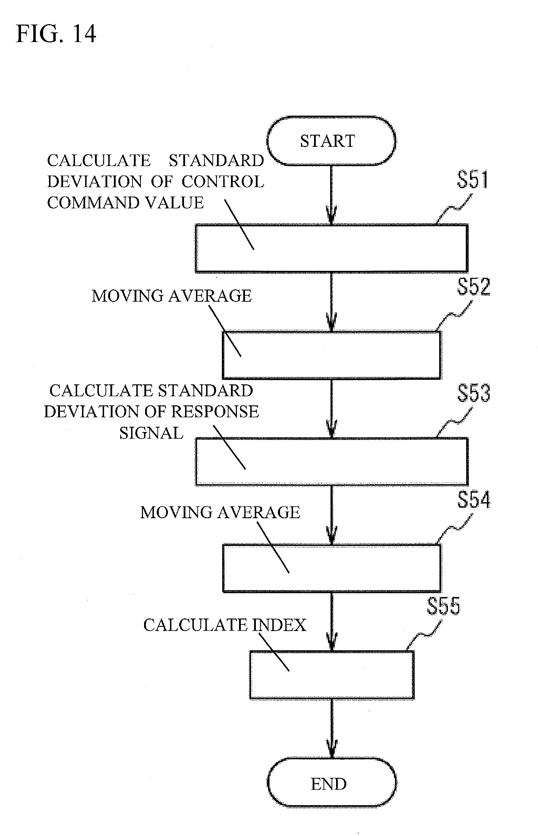

Next, the control unit 10 executes a calculation process of a self examination index (Step S42). FIG. 14 illustrates an example of a flowchart of details of the calculation process of the self examination index. As illustrated in FIG. 14, when the calculation process of the self examination index is executed, the control unit 10 calculates the standard deviation of the control command value (Step S51). The standard deviation is calculated based on the control command value stored in the memory unit 13, and is, for example, calculated from about 50 control command values that are previously stored. The standard deviation of the control command value obtained in the Step S51 is stored in the memory unit 13.

Next, the control unit 10 obtains a moving average value by performing a moving average process of the standard deviation obtained in the Step S51 (Step S52). For example, the moving average value is obtained in accordance with the following formula (4). The moving average value of the control command value obtained in the Step S52 is stored in the memory unit 13.

$$\text{The moving average value in this time} = (63/64) \times \text{the previous moving average value}$$
$$+ (1/64) \times \text{the standard deviation in this time} \qquad (4)$$

Next, the control unit 10 calculates the standard deviation of the detected value of the sensor (Step S53). The standard deviation is calculated based on the detected value stored in the memory unit 13, and is, for example, calculated from about 50 detected values that are previously stored. The standard deviation of the detected value obtained in the Step S53 is stored in the memory unit 13.

Next, the control unit 10 obtains the moving average value by performing the moving average process of the standard deviation obtained in the Step S53 (Step S54). In this case, the moving average value is obtained in accordance with the above-mentioned formula (4). The moving average value of the detected value obtained in the Step S54 is stored in the memory unit 13. Next, the control unit 10 calculates the self examination index (Step S55). The self examination index obtained in the Step S55 is stored in the memory unit 13 as a first self examination index. For example, the first self examination index is obtained in accordance with the following formula (5). After that, the control unit 10 terminates the execution of the flowchart.

$$\text{Self examination index} = (\text{moving average value of control command value}) / (\text{moving}$$
$$\text{average value of detected value}) \qquad (5)$$

With reference to FIG. 13 again, the control unit 10 determines whether a predetermined time has passed or not (Step S44). The predetermined time is, for example, approximately 150 seconds. If it is determined as "No" in the Step S43, the Step S41 is executed again. If it is determined as "Yes" in the Step S43, the control unit 10 calculated an average value of the first self examination index (Step S44). The average value of the first self examination index obtained in the Step S44 is stored in the memory unit 13.

Next, the control unit 10 adds a second add signal to the control command value given to the supply amount control device that is an objective in the Step S41 (Step S45). The second add signal is a signal having larger amplitude than the first add signal. Next, the control unit 10 executes the calculation process of the self examination index of FIG. 14 (Step S46). The self examination index obtained through the calculation process of the self examination index is stored in the memory unit 13 as a second self examination index.

Next, the control unit 10 determines whether a predetermined time has passed or not (Step S47). The predetermined time is, for example, approximately 150 seconds. If it is determined as "No" in the Step S47, the Step S45 is executed again. If it is determined as "Yes" in the Step S47, the control unit 10 calculated an average value of the second self examination index (Step S48). The average of the second self examination index obtained in the Step S48 is stored in the memory unit 13. After that, the control unit 10 terminates the execution of the flowchart.

In accordance with the flowcharts of FIG. 13 and FIG. 14, it is possible to obtain the relation between the amplitude of the control command value given to the supply amount control device and the amplitude of the detected value of the sensor in case where the supply amount control device and the sensor are normal. In concrete, it is possible to obtain an initial first self examination index and an initial second self examination index. The initial first self examination index and the initial second self examination index are used as the reference values.

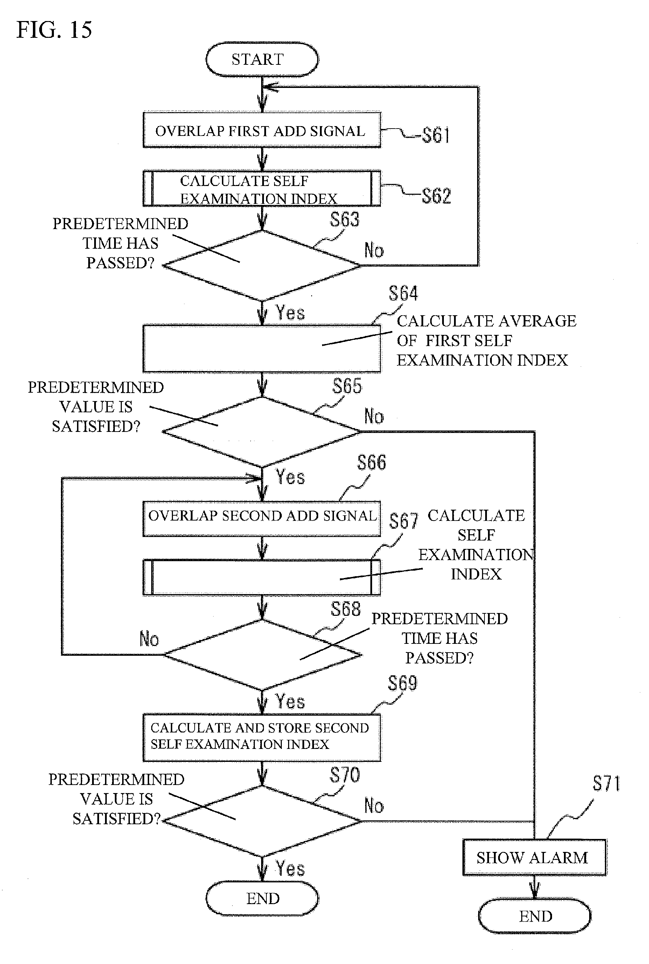

FIG. 15 illustrates an example of a flowchart executed when the accumulated power-generation time of the fuel cell 70 is over a predetermined time. The flowchart of FIG. 15 is, for example, executed when the accumulated power-generation time of the fuel cell 70 is over 1000 hours after the fuel cell system 102 is started. As illustrated in FIG. 15, the control unit 10 executes Step S61 through Step S64. The Step S61 through the Step S64 are the same as the Step S41 through the Step S44 of FIG. 13. Thus, the first self examination index is obtained.

Next, the control unit 10 determines whether the first self examination index satisfies a predetermined value (Step S65). Here, the control unit 10 determines whether the relation between the amplitude of the control command value given to the supply amount control device and the amplitude of the detected value of the sensor is changed or not. For example, the control unit 10 determines whether the following formula (6) is satisfied or not. In accordance with the formula (6), it is possible to determine that the relation between the amplitude of the control command value given to the supply amount control device and the amplitude of the detected value of the sensor is changed when the amplitude of the detected value of the sensor gets lower relative to the amplitude of the control command value.

$$\text{Self examination index 1} > (\text{Initial self examination index 1}) \times 0.5 \qquad (6)$$

If it is determined as "Yes" in the Step S65, the control unit 10 executes Step S66 through Step S69. The Step S66 through the Step S69 are the same as the Step S45 through the Step S48 of FIG. 13. Thus, the second self examination index is obtained.

Next, the control unit 10 determines whether the second self examination index satisfies a predetermined value or not (Step S70). Here, the control unit 10 determines whether the relation between the amplitude of the control command value given to the supply amount control device and the amplitude of the detected value of the sensor is changed or not. For example, the control unit 10 determines whether the following formula (7) is satisfied or not. In accordance with the formula (7), it is possible to determine that the relation between the amplitude of the control command value given to the supply amount control device and the amplitude of the detected value of the sensor is changed when the ratio between the amplitude of the detected value of the sensor and the amplitude of the control command value of the sensor is changed.

$$(\text{Initial self examination index 2}) \times 1.1 > \text{Self examination index 2} > (\text{Initial self examination index 2}) \times 0.9 \qquad (7)$$

If it is determined as "Yes" in the Step S70, the control unit 10 terminates the flowchart. If it is determined as "No" in the Step S65 or the Step S70, the control unit 10 makes the information device 91 inform an alarm (Step S71). In this case, the information device 91 informs the information for identifying whether it is determined as "No" in the Step S65 or it is determined as "No" in the Step S70 (Step S71). After that, the control unit 10 terminates the execution of the flowchart.

In accordance with the flowchart of FIG. 15, it is possible to determine whether the relation between the amplitude of the control command value given to the supply amount control device and the amplitude of the detected value of the sensor is changed or not. As a result, it is possible to determine whether there is abnormality of any of the supply amount control device and the sensor. And, it is possible to determine the relation between the supply amount control device and the sensor accurately by setting various amplitudes. The power-generation load of the fuel cell 70 may be lowered in the Step S71.

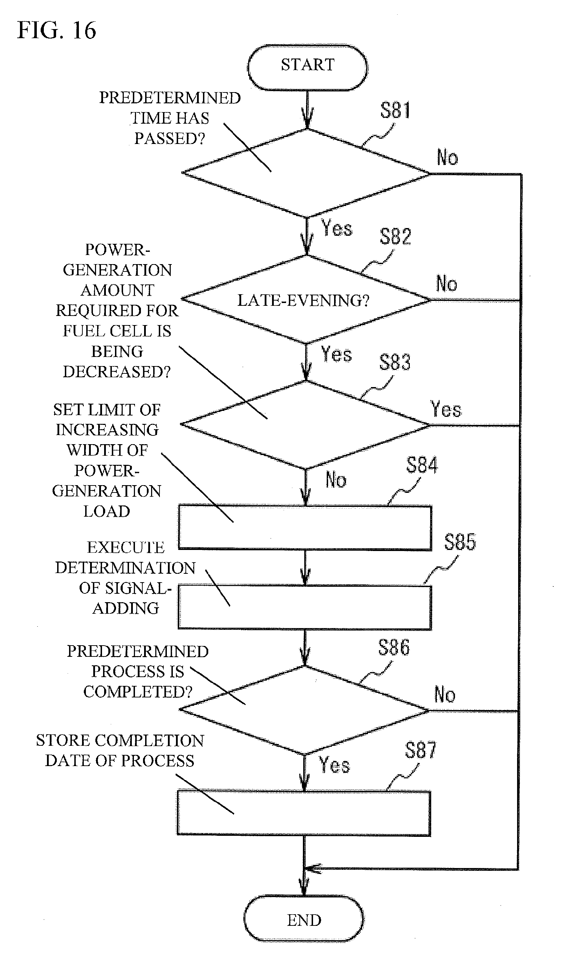

It is preferable that the flowchart of FIG. 15 is executed when the changing amount of the power-generation amount of the fuel cell 70 is small. This is because the determination accuracy may get lower when the changing amount of the power-generation amount of the fuel cell 70 is large. FIG. 16 illustrates an example of a flowchart executed when the execution timing of the flowchart of FIG. 15 is determined.

As illustrated in FIG. 16, the control unit 10 determines whether a predetermined time has passed or not after the flowchart of FIG. 15 is previously executed (Step S81). The predetermined time is, for example, one week or so. If it is determined as "Yes" in the Step S81, the control unit 10 determines whether the current time is late-evening or not (Step S82). The late-evening is, for example, 1:00 a.m. to 3:00 a.m.

If it is determined as "Yes" in the Step S82, the control unit 10 determines whether the required power-generation amount of the fuel cell 70 is being decreased (Step S83). For example, when the required power-generation amount decreases at -3W/sec or more, it is determined that the power-generation amount is being decreased. If it is determined as "No" in the Step S82, the control unit 10 sets the upper limit of the increasing width of the power-generation load of the fuel cell 70 (Step S84). The upper limit may be 3W/sec, for example.

Next, the control unit 10 executes the flowchart of FIG. 15 (Step S85). Next, the control unit 10 determines whether the execution of the flowchart of FIG. 15 is terminated or not (Step S86). If it is determined as "Yes" in the Step S86, the control unit 10 makes the memory unit 13 store the date on which the flowchart of FIG. 15 is completed. After that, the control unit 10 terminates the execution of the flowchart. If it is determined as "No" in the Steps S81, S82 and S86, the control unit 10 terminates the flowchart.

In accordance with the flowchart of FIG. 16, when the changing amount of the power-generation amount of the fuel cell 70 is small, the flowchart of FIG. 15 is executed. Thus, the determination accuracy of the abnormality of the auxiliary device is improved.

If the oxygen concentration sensor 83 is used as the sensor, it is possible to determine easily whether there is abnormality of the oxygen concentration sensor 83 or not when the oxygen concentration sensor 83 detects the oxygen concentration of air. Therefore, if the oxygen concentration sensor 83 is used as the sensor, it is possible to determine easily whether there is abnormality of the supply amount control device or not.

And, it is possible to determine which auxiliary device has abnormality, by using the amplitude of the detected value of a plurality of sensors. In concrete, if it is determined that there is abnormality of only a specific sensor when the flowchart of FIG. 15 is executed with respect to the plurality of sensors, it is possible to determine that there is abnormality of the specific sensor. And, if it is determined that there is abnormality of all sensors when the flowchart of FIG. 15 is executed with respect to the plurality of sensors, it is possible to determine that there is abnormality of the supply amount control device. Therefore, it is possible to specify the auxiliary device in which there is abnormality, when a plurality of sensors are objective.

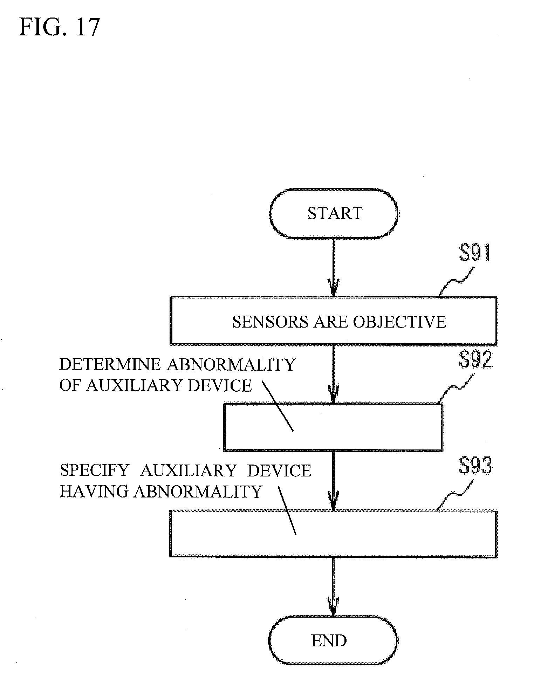

FIG. 17 illustrates an example of a flowchart executed when the auxiliary device having abnormality is specified. As illustrated in FIG. 17, the control unit 10 reads detected values of a plurality of sensors (Step S91). Next, the control unit 10 executes the flowchart of FIG. 15 with respect to each sensor (Step S92). Next, the control unit 10 specifies an auxiliary device in which there is abnormality (Step S93). After that, the control unit 10 terminates the execution of the flowchart. In accordance with the flowchart of FIG. 17, it is easy to specify the auxiliary device in which there is abnormality.

The above-mentioned embodiments can be applied to other type fuel cell such as a solid polymer type, a solid oxide type, or a molten carbonate type. However, the temperature changing amount is large in the case of the fuel cell such as solid oxide type operating at high temperature. Therefore, the determination accuracy of abnormality of an auxiliary device is improved, when the temperature sensor 85 is used.

DESCRIPTION OF LETTERS OR NUMERALS

| 10 | Control unit |
| 11 | Input / Output port |
| 12 | CPU |
| 13 | Memory unit |
| 20 | Raw fuel supply unit |
| 30 | Reform water supply unit |
| 33 | Regulating valve |
| 40 | Oxidant gas supply unit |
| 50 | Reformer |
| 60 | Combustion chamber |
| 70 | Fuel cell |
| 71 | Cathode |
| 72 | Anode |
| 80 | Display device |
| 81 | Voltage sensor |
| 82 | Current sensor |
| 83 | Oxygen concentration sensor |
| 84 | Pressure sensor |
| 85 | Temperature sensor |
| 90 | Heat exchanger |
| 91 | Inform device |
| 100 | Fuel cell system |

**Claims**

**1.** A fuel cell system **characterized by** comprising:

an input-amplitude-value obtain unit that obtains an amplitude value of an input value given to a fuel cell;
an output-amplitude-value obtain unit that obtains an amplitude value of an output value output from the fuel cell; and
an operation condition change unit that changes an operation condition of the fuel cell according to a comparison of an amplitude value of an input value obtained by the input-amplitude-value obtain unit and an amplitude value of an output value obtained by the output-amplitude-value obtain unit.

**2.** The fuel cell system as claimed in claim 1, **characterized in that** the operation condition change unit changes the operation condition of the fuel cell when a difference between the amplitude value of the input value and the amplitude value of the output value is a predetermined value or less.

3. The fuel cell system as claimed in claim 1 or 2, **characterized in that** an anode pressure is used as the input value given to the fuel cell.

4. The fuel cell system as claimed in claim 3, **characterized in that** the anode pressure is a pressure in a reformer that generates fuel gas including hydrogen through a steam-reforming reaction with use of reform water and supplies the fuel gas to an anode of the fuel cell.

5. The fuel cell system as claimed in any of claims 1 to 4, **characterized in that** at least one of a power-generation electrical power, a power-generation current and a power-generation voltage is used as the output value of the fuel cell.

6. The fuel cell system as claimed in any of claims 1 to 4, **characterized in that** oxygen concentration in exhaust gas exhausted when anode off gas of the fuel cell burns with use of cathode off gas is used as the output value of the fuel cell.

7. The fuel cell system as claimed in any of claims 1 to 6, **characterized in that** a standard deviation of the input value and the output value is used in the comparison of the amplitude value of the input value and the amplitude value of the output value.

8. The fuel cell system as claimed in claim 7, **characterized in that** a multiplied value or a divided value of standard deviations of the input value and the output value is used in the comparison of the amplitude value of the input value and the amplitude value of the output value.

9. The fuel cell system as claimed in claim 8, **characterized in that** a moving average value of a multiplied value or a divided value of standard deviations of the input value and the output value is used in the comparison of the amplitude value of the input value and the amplitude value of the output value.

10. The fuel cell system as claimed in any of claims 1 to 9, **characterized in that** the operation condition change unit lowers a rated output of the fuel cell when a difference between the amplitude value of the input value and the amplitude value of the output value is a predetermined value or less.

11. The fuel cell system as claimed in any of claims 1 to 9, **characterized in that** the operation condition change unit increases at least one of a supply amount of fuel gas to the fuel cell and a supply amount of oxidant gas to the fuel cell when a difference between the amplitude value of the input value and the amplitude value of the output value is a predetermined value or less.

12. A fuel cell system **characterized by** comprising:

    an input-amplitude-value obtain unit that obtains an amplitude value of an input value given to a fuel cell;
    an output-amplitude-value obtain unit that obtains an amplitude value of an output value output from the fuel cell; and
    a deterioration determination unit that determines deterioration of the fuel cell according to a comparison of an amplitude value of an input value obtained by the input-amplitude-value obtain unit and an amplitude value of an output value obtained by the output-amplitude-value obtain unit.

13. A fuel cell system **characterized by** comprising:

    a supply amount control device that controls a supply amount of fluid required for supplying of reaction gas to a fuel cell;
    a sensor that detects property of reaction gas or reaction off gas exhausted from the fuel cell or an output of the fuel cell;
    an overlap unit that overlaps an add signal having a predetermined cycle and predetermined amplitude with a control command value given to the supply amount device; and
    a determination unit that determines a relation between amplitude of the control command value and amplitude of a detected value of the sensor when the add signal is overlapped with the control command value.

14. The fuel cell system as claimed in claim 13, **characterized in that** the determination unit determines that there is abnormality of one of the supply amount control device and the sensor when a divergence degree of a ratio between the amplitude of the control command value and the amplitude of the detected value of the sensor from a reference value is more than a predetermined value or less than a predetermined value.

15. The fuel cell system as claimed in claim 14, **characterized in that** the determination unit uses a standard deviation of the amplitude of the control command value and a standard deviation of the amplitude of the detected value of the sensor are used when the ratio between the amplitude of the control command value and the amplitude of the detected value of the sensor is obtained.

16. The fuel cell system as claimed in any of claims 13 to 15, **characterized in that** the determination unit uses detected values of a plurality of the sensors detecting the property of the reaction gas or the reaction off gas or the output of the fuel cell.

17. The fuel cell system as claimed in claim 16, **characterized in that** the determination unit determines that there is abnormality of one of the plurality of the sensors in which there is abnormality of one of the supply amount control device and the sensor.

18. The fuel cell system as claimed in claim 16 or 17, **characterized in that**:

the supply amount control device controls a supply amount of raw fuel supplied to a reformer generating fuel gas used in power-generation in the fuel cell; and
the plurality of the sensors are a temperature sensor detecting a temperature of a combustion chamber in which off gas from the fuel cell burns and an oxygen concentration sensor detecting oxygen concentration in exhaust gas exhausted from the combustion chamber.

19. The fuel cell system as claimed in any of claims 13 to 18, **characterized in that** the overlap unit overlaps a first add signal having small amplitude and a second add signal having large amplitude with the control command value.

20. The fuel cell system as claimed in any of claims 13 to 19, **characterized by** further comprising an inform unit that informs an alarm when it is determined that there is abnormality of one of the supply amount control device and the sensor.

21. The fuel cell system as claimed in any of claims 13 to 20, **characterized by** further comprising an operation condition change unit that changes an operation condition of the fuel cell when it is determined that there is abnormality of one of the supply amount control device and the sensor.

22. A fuel cell control method **characterized by** comprising:

an input-amplitude-value obtain step of obtaining an amplitude value of an input value given to a fuel cell;
an output-amplitude-value obtain step of obtaining an amplitude value of an output value output from the fuel cell; and
an operation condition change step of changing an operation condition of the fuel cell according to a comparison of an amplitude value of an input value obtained by the input-amplitude-value obtain step and an amplitude value obtained by the output-amplitude-value obtain step.

23. A fuel cell determination method **characterized by** comprising:

an input-amplitude-value obtain step of obtaining an amplitude value of an input value given to a fuel cell;
an output-amplitude-value obtain step of obtaining an amplitude value of an output value output from the fuel cell; and
a determination step of determining deterioration of the fuel cell according to a comparison of an amplitude value of an input value obtained by the input-amplitude-value obtain step and an amplitude value obtained by the output-amplitude-value obtain step.

24. A fuel cell control method **characterized by** comprising:

an overlap step of overlapping an add signal having a predetermined cycle and predetermined amplitude with a control command value given to the supply amount device that controls a supply amount of fluid required for supplying of reaction gas to a fuel cell; and

a determination step of determining a relation between amplitude of the control command value and amplitude of a detected value of a sensor that detects property of reaction gas or reaction off gas exhausted from the fuel cell or an output of the fuel cell when the add signal is overlapped with the control command value.

# FIG. 1

FIG. 2

FIG. 3A

NEW FC

30 MINUTES

POWER-GENERATION CURRENT

ANODE PRESSURE

DETERIORATION DETERMINATION INDEX
= CHANGING AMOUNT OF CURRENT /
CHANGING AMOUNT OF ANODE PRESSURE

FIG. 3B

DETERIORATED FC

30 MINUTES

POWER-GENERATION
CURRENT

ANODE PRESSURE

## FIG. 4

```
                    START

OBTAIN INPUT VALUE
  TO FUEL CELL
                    [          ]  ~S1

OBTAIN OUTPUT VALUE
  FROM FUEL CELL
                    [          ]  ~S2

COMPARE AMPLITUDE OF INPUT
VALUE AND AMPLITUDE OF
    OUTPUT VALUE
                    [          ]  ~S3

CONDITION IS SATISFIED?
                              S4
                    <          >       No

      CHANGE         Yes
   OPERATION
   CONDITION
                    [          ]  ~S5

                    END
```

FIG. 5

START

READ P_fc — S11

CALCULATE σ (P_fc) — S12

READ P_and — S13

CALCULATE σ (P_and) — S14

READ I_fc — S15

CALCULATE σ (I_fc) — S16

σ (p_and)> σ (p_and)_ref ? — S17

No

det_fc=0 — S19

Yes

CALCULATE σ (I_fc) — S18

CALCULATE X(det_fc) — S20

σ (p_fc) < σ (p_fc)_ref ? — S21

No

Yes

X(det_fc) > X(det_fc) _ref ? — S22

No

Yes

n = n +1 — S23

n = 0 — S26

n > n_ref ? — S24

No

Yes

S25

CHANGE OPERATION CONDITION

END

## FIG. 6

FIG. 7

```
                        ┌─────────────┐
                        │    START    │
                        └──────┬──────┘
                               │
    OBTAIN INPUT VALUE         ▼
       TO FUEL CELL
   ┌───────────────────────────────────────┐
   │                                        │~ S31
   └───────────────────┬────────────────────┘
                       │
    OBTAIN OUTPUT VALUE ▼
      FROM FUEL CELL
   ┌───────────────────────────────────────┐
   │                                        │~ S32
   └───────────────────┬────────────────────┘
                       │
 COMPARE AMPLITUDE OF INPUT
  VALUE AND AMPLITUDE OF   ▼
    OUTPUT VALUE
 ┌─────────────────────────────────────────────┐
 │                                              │~ S33
 └──────────────────────┬───────────────────────┘
                        │
   CONDITION IS SATISFIED? ▼         S34
                      ◇──────────────  No
                       ◇              ───┐
                        ◇                │
                         ▼ Yes           │
   SHOW INFORMATION                       │
      TO USER                             │
   ┌────────────────────────┐             │
   │                        │~ S35        │
   └───────────┬────────────┘             │
               │ ◄──────────────────────────┘
               ▼
        ┌─────────────┐
        │     END     │
        └─────────────┘
```

24

## FIG. 8

## FIG. 9

FIG. 10A

FIG. 10B

FIG. 10C

RAW FUEL
REFORM WATER

FUEL GAS

FIG. 11

FC CURRENT    TEMPERATURE OF COMBUSTION CHAMBER

TIME ⟶

DRIVING VOLTAGE OF RAW FUEL PUMP

FIG. 12

CONTROL COMMAND VALUE

ADD SIGNAL

COMMAND VALUE

TIME

FIG. 13

START

OVERLAP FIRST ADD SIGNAL ~S41

CALCULATE SELF
EXAMINATION INDEX ~S42

PREDETERMINED TIME
HAS PASSED? S43 No

CALCULATE AND STORE
FIRST SELF
EXAMINATION INDEX Yes S44

S45

OVERLAP SECOND ADD SIGNAL S46

CALCULATE
SELF
EXAMINATION
INDEX

PREDETERMINED
TIME HAS
PASSED? No S47

Yes S48

CALCULATE AND STORE
SECOND SELF
EXAMINATION INDEX END

# FIG. 14

CALCULATE STANDARD DEVIATION OF CONTROL COMMAND VALUE — S51

MOVING AVERAGE — S52

CALCULATE STANDARD DEVIATION OF RESPONSE SIGNAL — S53

MOVING AVERAGE — S54

CALCULATE INDEX — S55

START

END

FIG. 15

START

OVERLAP FIRST ADD SIGNAL —S61

CALCULATE SELF EXAMINATION INDEX —S62

S63 PREDETERMINED TIME HAS PASSED? No

Yes

S64 CALCULATE AVERAGE OF FIRST SELF EXAMINATION INDEX

S65 PREDETERMINED VALUE IS SATISFIED? No

Yes

S66 OVERLAP SECOND ADD SIGNAL

S67 CALCULATE SELF EXAMINATION INDEX

S68 PREDETERMINED TIME HAS PASSED? No

Yes

CALCULATE AND STORE SECOND SELF EXAMINATION INDEX S69

S70 PREDETERMINED VALUE IS SATISFIED? No

S71 SHOW ALARM

Yes

END

END

## FIG. 16

START

S81 — PREDETERMINED TIME HAS PASSED? — No

Yes

S82 — LATE-EVENING? — No
(POWER-GENERATION AMOUNT REQUIRED FOR FUEL CELL IS BEING DECREASED?)

Yes

S83 — Yes
(SET LIMIT OF INCREASING WIDTH OF POWER-GENERATION LOAD)

No

S84 — EXECUTE DETERMINATION

S85 — OF SIGNAL-ADDING

S86 — PREDETERMINED PROCESS IS COMPLETED? — No

Yes

S87 — STORE COMPLETION DATE OF PROCESS

END

FIG. 17

```
                    ┌─────────────┐
                    │    START    │
                    └──────┬──────┘
                           │                    S91
                           ▼
        ┌──────────────────────────────────────┐
        │         SENSORS ARE OBJECTIVE         │
        └──────────────────┬───────────────────┘
                           │                    S92
DETERMINE ABNORMALITY      │
OF AUXILIARY DEVICE        ▼
                ┌──────────────────────┐
                │                      │
                └──────────┬───────────┘
                           │                    S93
SPECIFY  AUXILIARY  DEVICE │
HAVING ABNORMALITY         ▼
        ┌──────────────────────────────────────┐
        │                                      │
        └──────────────────┬───────────────────┘
                           │
                           ▼
                    ┌─────────────┐
                    │     END     │
                    └─────────────┘
```

## INTERNATIONAL SEARCH REPORT

| International application No. |
| --- |
| PCT/JP2011/051820 |

A. CLASSIFICATION OF SUBJECT MATTER
*H01M8/04*(2006.01)i, *H01M8/12*(2006.01)n

According to International Patent Classification (IPC) or to both national classification and IPC

B. FIELDS SEARCHED

Minimum documentation searched (classification system followed by classification symbols)
H01M8/04, H01M8/12

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2010-27580 A (Osaka Gas Co., Ltd.), 04 February 2010 (04.02.2010), | 1,2,5,7-12, 22,23 |
| A | entire text; all drawings (Family: none) | 3,4,6 |
| Y | JP 2007-59129 A (Nissan Motor Co., Ltd.), 08 March 2007 (08.03.2007), | 1,2,5,7-12, 22,23 |
| A | paragraphs [0084] to [0087]; fig. 9 (Family: none) | 3,4,6 |
| Y | JP 2006-244821 A (Nissan Motor Co., Ltd.), 14 September 2006 (14.09.2006), entire text; all drawings (Family: none) | 11 |

☒ Further documents are listed in the continuation of Box C.　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 26 April, 2011 (26.04.11) | 17 May, 2011 (17.05.11) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/051820

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 2006-153601 A  (Honda Motor Co., Ltd.),<br>15 June 2006 (15.06.2006),<br>entire text; all drawings<br>(Family: none) | 13,14,16-18,<br>20,21,24<br>15,19 |
| Y<br>A | JP 2007-172888 A  (Nissan Motor Co., Ltd.),<br>05 July 2007 (05.07.2007),<br>entire text; all drawings<br>(Family: none) | 13,14,16-18,<br>20,21,24<br>15,19 |
| Y | JP 2001-265433 A  (Advanced Technology<br>Institute of Commuterhelicopter, Ltd.),<br>28 September 2001 (28.09.2001),<br>entire text; all drawings<br>(Family: none) | 13,14,16-18,<br>20,21,24 |

Form PCT/ISA/210 (continuation of second sheet) (July 2009)

## INTERNATIONAL SEARCH REPORT

| | |
|---|---|
| | International application No. |
| | PCT/JP2011/051820 |

---

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III     Observations where unity of invention is lacking (Continuation of item 3 of first sheet)**

This International Searching Authority found multiple inventions in this international application, as follows:
   The invention in claim 1 and the invention in claim 13 have no same or corresponding special technical feature.  The following two inventions (invention groups) are involved in claims.

   (Invention 1) the inventions in claims 1 - 12, 22, 23:
   The invention having a configuration for comparing the amplitude value of an input value with the amplitude value of an output value.
   (Invention 2) the inventions in claims 13 - 21, 24:
   The invention having a configuration for overlapping a control command value and an additional signal concerning predetermined cycle and amplitude.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 2 544 287 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005018035 A